# EUROPÄISCHE PATENTSCHRIFT

(11) **EP 2 671 058 B1**
(45) Veröffentlichungstag und Bekanntmachung des Hinweises auf die Patenterteilung: **11.01.2017**
(21) Anmeldenummer: 12707698.2
(22) Anmeldetag: 03.02.2012
(51) Int. Cl.: G01J 3/28, G01J 1/18, G01N 21/64, G01J 1/58, G01J 3/10, G01J 3/44, G01J 1/42

(54) **PRÜFVERFAHREN FÜR EINE FLUCHTWEGMARKIERUNG**
TEST METHOD FOR AN ESCAPE ROUTE MARKING
PROCÉDÉ DE CONTRÔLE POUR MARQUAGE D'ISSUES DE SECOURS

(30) Priorität: 05.02.2011 DE 102011010393
(43) Veröffentlichungstag der Anmeldung: 11.12.2013
(73) Patentinhaber: Lufthansa Technik AG, 22335 Hamburg (DE)
(72) Erfinder: BIEHL, Torben, 22081 Hamburg (DE)
(74) Vertreter: Hauck Patentanwaltspartnerschaft mbB
(86) Internationale Anmeldenummer: PCT/EP2012/000484
(87) Internationale Veröffentlichungsnummer: WO 2012/104095

(56) Entgegenhaltungen:
- WO-A1-01/52224
- WO-A2-01/46615
- DE-A1-102009 008 526

## Beschreibung

Die vorliegende Erfindung betrifft ein Prüfverfahren für eine Fluchtwegmarkierung.

Bei dem Einsatz von nicht elektrischen Fluchtwegmarkierungen, insbesondere wenn deren Aufladung nicht durch Tageslicht erfolgt, sondern durch eine künstliche Lichtquelle, ist sicherzustellen, dass die Fluchtwegmarkierung eine ausreichende Nachleuchtdauer besitzt. Für den Einsatz in Flugzeugen muss der Nachweis erbracht werden, dass die Fluchtwegmarkierung über eine ausreichende Nachleuchtdauer verfügt, um im Notfall die Fluchtwege in der Flugzeugkabine hinreichend hell anzeigen zu können.

Wenn eine Fluggesellschaft eine nicht-elektrische Fluchtwegmarkierung in einem Flugzeug installieren möchte, ist zunächst eine Lichtmessung an der Einbauposition der Fluchtwegmarkierung durchzuführen, um zu verifizieren, dass die Beleuchtung in der Flugzeugkabine ausreichend hell ist, um die Fluchtwegmarkierung hinreichend aufladen zu können. Gemessen wird die Beleuchtungsstärke mit einem herkömmlichen Luxmeter. Das Luxmeter erfasst unabhängig von der Wellenlänge die Beleuchtungsstärke, die in Lux (lx) angegeben wird. Bei diesem Verfahren wird eine definierte Lichtquelle mit einer definierten spektralen Beleuchtungsstärke eingesetzt, um aussagekräftige Messungen zu erzielen. Abhängig von der gemessenen Beleuchtungsstärke wird dann entschieden, ob die Fluchtwegmarkierung für die Einbauposition eine ausreichende Nachleuchtdauer erzeugt.

Zukünftig erfolgt die Beleuchtung von Flugzeugkabinen vermehrt durch LED-Lichtsysteme. Der Einsatz von LED-Lichtsystemen mit verschiedenfarbigen LEDs ermöglicht eine Vielzahl verschiedener Lichtszenarien (Mischfarben) und Lichtspektren. Je nach relativer Gewichtung der Strahlungsleistung der Leuchtdioden und je nach Bauart der Leuchtdioden können hier sehr verschiedene Lichtspektren auftreten. Bei der Beleuchtung mit LED-Lichtsystemen kann daher nicht mit Hilfe einer einmaligen Messung mit dem Luxmeter festgestellt werden, ob eine für die vorgeschriebene Nachleuchtdauer ausreichende Beleuchtung erfolgt.

Aus DE 10 2009 008 526 A1 ist ein Verfahren zum Ermitteln des Lichtstroms von optischen Strahlen, insbesondere Leuchtdioden bekannt geworden. Die Bestimmung des Lichtstroms erfolgt getrennt, ohne feste Filtercharakteristiken parallel nach radiometrischer Strahlungsleistung und Verlauf des optischen Strahlungsspektrums eines Strahlers mittels Messeinrichtungen an einer Dreiport-Ulbrichtkugel mittels einer leistungskalibrierten Photodiode und eines unkalibrierten Spektrometers. Deren schaltend verknüpfte Ergebnisse werden aus einer veränderbaren Helligkeitstabelle frequenzabhängig bedämpft, so dass insbesondere für monochromatisch abstrahlende LEDs, auf kostengünstige Weise reproduzierbar Lichtstrom-Ergebnisse gewonnen werden.

Aus DE 10 2009 008 526 ist bekannt geworden, Flugzeug-Bordbeleuchtungen mittels einer Photodiode und eines binären Spektrometers zu messen.

Aus WO 01/52224 A1 ist die Verwendung von photolumineszentem Material für Luftwegmarkierungen bekannt.

WO 01/46615 A2 beschreibt ein photolumineszentes Garn, dessen Nachleuchten mit einem optischen Sensor gemessen wird.

Der Erfindung liegt die Aufgabe zugrunde, ein Prüfverfahren für eine Fluchtwegmarkierung sowie ein Spektrometer für ein solches bereitzustellen, das es erlaubt, mit einer einfachen Messung festzustellen, ob eine ausreichende Beleuchtung für eine Fluchtwegmarkierung erfolgt.

Erfindungsgemäß wird die Aufgabe durch ein Prüfverfahren mit den Merkmalen aus Anspruch 1 gelöst. Vorteilhafte Ausgestaltungen bilden den Gegenstand der Unteransprüche.

Das erfindungsgemäße Prüfverfahren ist für eine photolumineszente Fluchtwegmarkierung vorgesehen, die in einer Einbauposition angeordnet werden kann und von einer Lichtquelle in einer definierten Position relativ zu der Einbauposition beleuchtet wird, um die Fluchtwegmarkierung für ein Nachleuchten
aufzuladen. Allgemein ist eine Bestrahlungsstärke der Lichtquelle ein entscheidender Faktor für die Aufladung der photolumineszenten Fluchtwegmarkierung, so dass bei der Prüfung der Fluchtwegmarkierung stets zu berücksichtigen ist, in welchen Positionen relativ zueinander sich die Lichtquelle und die Fluchtwegmarkierung befinden. Bei dem erfindungsgemäßen Verfahren wird in einem ersten Verfahrensschritt eine Anregungskurve A(*λ*) für die Fluchtwegmarkierung abhängig von der Wellenlänge bereitgestellt. Diese kann gemessen werden oder anhand von technischen Daten zu einem photolumineszenten Material in der Fluchtwegmarkierung ermittelt werden. Die Anregungskurve gibt beispielsweise das relative spektrale Gewicht an, mit dem eine Fluchtwegmarkierung aufgeladen wird. In einem weiteren Verfahrensschritt wird die Bestrahlungsstärke E(*λ*) der Lichtquelle für die Einbauposition der Fluchtwegmarkierung abhängig von der Wellenlänge erfasst. Die Bestrahlungsstärke wird in den bekannten SI-Einheiten beispielsweise als W/m² als Bestrahlungsstärke der Lichtquelle für die Fluchtwegmarkierung, abhängig von der Wellenlänge, ermittelt. Das Erfassen der Bestrahlungsstärke E(λ) für die Einbauposition kann am Ort der Fluchtwegmarkierung oder auch vor einem Einbau der Fluchtwegmarkierung gesondert vorgenommen werden.

In einem weiteren Verfahrensabschnitt des erfindungsgemäßen Prüfverfahrens erfolgt eine Ermittlung einer gewichteten Bestrahlungsstärke abhängig von der Wellenlänge. Die gewichtete Bestrahlungsstärke ergibt sich als das Produkt der Bestrahlungsstärke und der Anregungskurve abhängig von der Wellenlänge. Die gewichtete Bestrahlungsstärke ist ein Maß dafür, welchen Beitrag zur Anregung die Bestrahlungsstärke pro Wellenlänge liefert. In einem weiteren Verfahrensschritt des erfindungsgemäßen Verfahrens wird eine Aufladebestrahlungsstärke (BiL) als Integral über die gewichtete Bestrahlungsstärke ermittelt. Statt eines Integrals ist auch eine entsprechende Summenbildung möglich. Die Aufladungsbestrahlungsstärke (BiL) ist ein Maß dafür, in welchem Umfang eine Aufladung der Fluchtwegmarkierung erfolgt. In einem nachfolgenden Schritt wird anhängig von der Aufladedauer tₗ mit Hilfe einer Kennlinie Kₜₗ (BiL) ermittelt, welche Nachleuchtdauer sich für die Fluchtwegmarkierung bei der Aufladedauer tₗ ergibt. Die Kennlinie Kₜₗ (BiL) wird empirisch ermittelt und für das Prüfverfahren bereitgestellt. Sollen mehrere unterschiedliche Werte für die Nachleuchtdauer betrachtet werden, so kann auch eine Schar von Kennlinien Kₜₗ (BiL) verwendet werden, die zu einem Wert tₗ jeweils eine Kennlinie Kₜₗ (BiL) aufweist. Anders als bei den bekannten Verfahren wird bei dem erfindungsgemäßen Verfahren die Anregungskurve der Fluchtwegmarkierung sowie die Bestrahlungsstärke abhängig von der Wellenlänge berücksichtigt. Ein LED-Lichtsystem mit seiner spezifischen spektralen Abstrahlung führt zu einer spezifischen Bestrahlungsstärke, so dass sich hieraus ein spezifischer Wert für die Aufladebestrahlungsstärke ergibt. Da das erfindungsgemäße Verfahren auf die Aufladebestrahlungsstärke abstellt, ist dieses unabhängig von dem eingesetzten Lichtsystem und dessen spektraler Abstrahlung. Es ist lediglich notwendig, vor dem konkreten Einsatz der Fluchtwegmarkierung die Aufladungsbestrahlungsstärke zu ermitteln, um eine zuverlässige Aussage über die zu erwartende Nachleuchtdauer bei einer vorgegebenen Aufladedauer zu treffen.

In einer bevorzugten Ausgestaltung können auch Veränderungen des Spektrums durch Farbfilter gesondert berücksichtigt werden. Bei Fluchtwegmarkierungen ist es möglich abweichend von einer Grundfarbe des photolumineszenten Materials, beispielsweise gelb-grün, weitere Farben durch Verwendung von Farbfiltern zu erzielen. Solche Farbfilter werden beispielsweise als eine Schicht oder Folie auf das photolumineszierende Material gelegt. Die Farbfilter reduzieren das von der Lichtquelle stammende Licht, das auf das photolumineszierende Material fällt, wobei jedem Farbfilter ein spektrales Transmissionsverhalten zugeordnet ist. Bei der Verwendung von Farbfiltern für das photolumineszente Material ist es daher vorteilhaft, das Transmissionsverhalten des Farbfilters bei der Bestrahlungsstärke zu berücksichtigen. Dies erfolgt so, als wäre die Lichtquelle mit dem Farbfilter ausgestattet. Die Bestrahlungsstärke E(λ) der Lichtquelle würde mit dem spektralen Transmissionsverhalten T(λ) multipliziert, um die effektive wirksame Bestrahlungsstärke der Lichtquelle für das photolumineszente Material zu bestimmen.

In einer bevorzugten Ausgestaltung wird die Kennlinie Kₜₗ (BiL) ermittelt, indem für mehrere Aufladebestrahlungsstärken die zugehörige Nachleuchtdauer gemessen und jeweils als ein Stützpunkt der Kennlinie verwendet wird. In dem vorgesehenen Prüfverfahren wird mit einer empirisch ermittelten Kennlinie gearbeitet. Die Kennlinie wird anhand von Stützpunkten durch Interpolation und/oder Extrapolation ermittelt.

In einer bevorzugten Weiterbildung des Prüfverfahrens wird eine Schar von Kennlinien Kₜₗ (BiL) für mehrere Aufladedauern ermittelt. Auf diese Weise kann bei einer vorgegebenen Aufladebestrahlungsstärke (BiL) eine zuverlässige Aussage darüber getroffen werden, welche Mindestaufladedauer erforderlich ist, um eine gewünschte oder geforderte Nachleuchtdauer zu erzielen.

In einer bevorzugten Ausgestaltung des Prüfverfahrens sind als Lichtquellen Leuchtdioden vorgesehen, die zur Ermittlung der Kennlinie in ihrer Lichtstärke eingestellt werden können, um unterschiedliche Aufladebestrahlungsstärken zu erzielen. Auf diese Weise kann die für das Prüfverfahren vorgesehene Kennlinie ohne großen technischen Aufwand ermittelt werden, in dem die Aufladebestrahlungsstärken eingestellt werden.

In einer bevorzugten Ausgestaltung des erfindungsgemäßen Prüfverfahrens wird als Anregungskurve A(*λ*) für eine Fluchtwegmarkierung eine Anregungskurve A_{pig}(*λ*) der nachleuchtenden Pigmente in der Fluchtwegmarkierung verwendet. Der Vorteil dieser Ausgestaltung des Prüfverfahrens liegt darin, dass die Anregungskurve der in der Fluchtwegmarkierung eingesetzten leuchtenden Pigmente gut bekannt ist und deren Messung somit entfallen kann.

Bei dem erfindungsgemäßen Prüfverfahren wird die Bestrahlungsstärke E(*λ*) bevorzugt mit einem Spektrometer gemessen.

In einer zweckmäßigen Ausgestaltung des Prüfverfahrens wird die Bestrahlungsstärke E(*λ*) für einen mittleren Abstand zwischen Lichtquelle und Fluchtwegmarkierung ermittelt. Das Abstellen auf einen mittleren Abstand erlaubt, komplizierte Geometrien zwischen Einbauposition der Fluchtwegmarkierung und den Positionen der Lichtquellen zu berücksichtigen, um eine zuverlässige Bestrahlungsstärke zu ermitteln. Der mittlere Abstand wird aus den bei der tatsächlichen Geometrie vorliegenden Abständen durch eine Mittelwertbildung bestimmt. Insbesondere bei der Erfassung der Kennlinie erweist es sich als besonders vorteilhaft, auf einen mittleren Abstand zwischen Lichtquelle und Fluchtwegmarkierung abzustellen.

Erfindungsgemäß wird die Aufgabe ebenfalls durch ein Spektrometer zur Prüfung einer Fluchtwegmarkierung gelöst. Die Fluchtwegmarkierung wird in einer Einbauposition relativ zu einer Lichtquelle durch diese beleuchtet, um die Fluchtwegmarkierung für ein Nachleuchten aufzuladen. Das erfindungsgemäße Spektrometer weist einen Speicher zum Speichern einer Anregungskurve A(λ) für die Fluchtwegmarkierung abhängig von der Wellenlänge auf. Ferner besitzt das Spektrometer eine spektrale Messeinrichtung, die die Bestrahlungsstärke der Lichtquelle für die Einbauposition der Fluchtwegmarkierung abhängig von der Wellenlänge erfasst. Zusätzlich ist ein weiterer Speicher zum Speichern einer bestimmten Bestrahlungsstärke B(λ) vorgesehen. Ebenfalls sind Mittel zur Multiplikation der Bestrahlungsstärke und der Anregungskurve vorgesehen. Ein Integrationsmittel greift auf den weiteren Speicher zu, um die gespeicherte Bestrahlungsstärke über den Wellenlängenbereich zu integrieren und so eine Aufladebeleuchtungsstärke (BiL) zu bestimmen. Ferner sind Auswertemittel vorgesehen, die eine von der Aufladedauer tₗ abhängige Kennlinienschar Kₜₗ(BiL) aufweisen, wobei eine der Kennlinien Kₜₗ(BiL) eine Nachleuchtdauer für die Fluchtwegmarkierung bei der Aufladedauer tₗ für die von dem Integrationsmittel ermittelte Aufladebestrahlungsstärke (BiL) angibt. Das erfindungsgemäße Spektrometer erlaubt eine zuverlässige Aussage darüber, über eine vorgesehene Fluchtwegmarkierung für eine Aufladedauer eine ausreichende Nachleuchtdauer besitzt. Als Auswertemittel des erfindungsgemäßen Spektrometers kann auch ein geeignetes Photometer vorgesehen sein.

Vorteilhafterweise ist das Spektrometer auch mit Mitteln zur Multiplikation der Bestrahlungsstärke E(λ) mit einem Transmissionsspektrum T(λ) eines Farbfilters der Fluchtwegmarkierung vorgesehen. Das Mittel zur Multiplikation gestattet es, auch Fluchtwegmarkierungen zu berücksichtigen, bei denen über Farbfilter die Aufladung und die Abstrahlung des photolumineszenten Materials erfolgen.

Ferner umfasst die Erfindung einen Computer zur Durchführung des erfindungsgemäßen Prüfverfahrens, wobei der Computer einen Dateneingang aufweist, um die Anregungskurve A(λ), die Beleuchtungsstärke B(λ), die Aufladedauer tₗ und eine Schar von Kennlinien Kₜₗ(BiL) zu lesen und einen Datenausgang, für die sich ergebene Nachleuchtdauer. Die Berechnung der Nachleuchtdauer erfolgt über den Computer gemäß dem erfindungsgemäßen Prüfverfahren.

In einer bevorzugten Ausgestaltung ist ein Computer vorgesehen, um auch ein Transmissionsspektrum T(λ) des Farbfilters der Fluchtwegmarkierung zu berücksichtigen.

Das erfindungsgemäße Prüfverfahren wird nachfolgend an einem Ausführungsbeispiel näher erläutert. Es zeigt:
- Fig. 1: eine Anregungskurve A(*λ*) für eine Fluchtwegmarkierung,
- Fig. 2: die Anregungskurve aus Fig. 1 zusammen mit einem Emissionsspektrum eines LED-Beleuchtungssystems,
- Fig. 3: das gewichtete Spektrum des LED-Beleuchtungssystems aus Fig. 2 und
- Fig. 4: die Kennlinie mit einer Aufladezeit von 15 Minuten abhängig von der Aufladebeleuchtungsstärke.

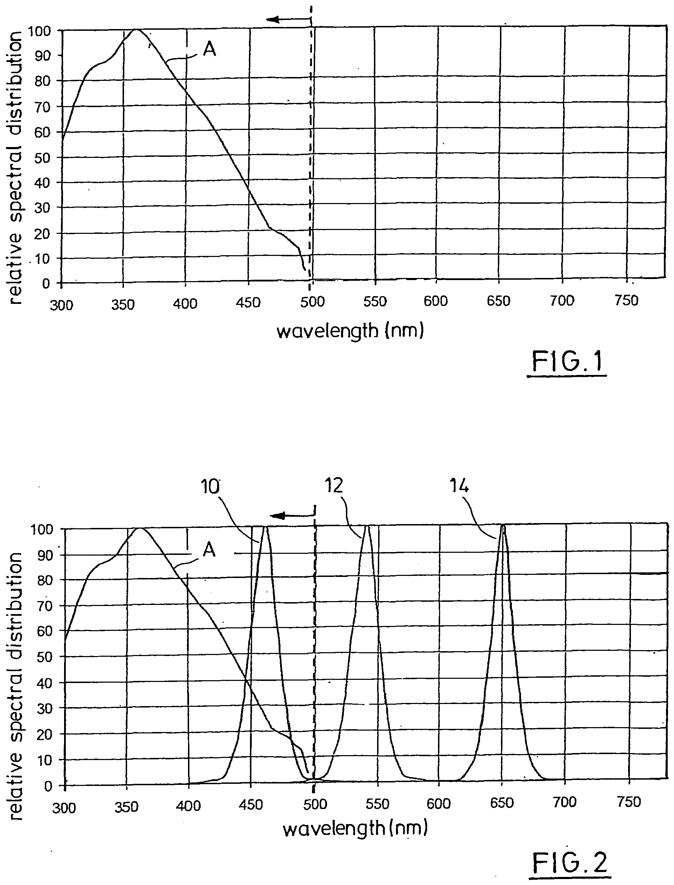

Fig. 1 zeigt eine Anregungskurve A(*λ*) für eine Fluchtwegmarkierung. Die Anregungskurve A(*λ*) ist als relative Anregung über der Wellenlänge des anregenden Lichts dargestellt. Die Anregungskurve ist in Fig. 1 auf 100 % normiert. Die maximale Anregung der Fluchtwegmarkierung tritt für eine Wellenlänge von ungefähr 360 nm auf. In einem Wellenlängenbereich oberhalb von 500 nm findet keine Anregung der Pigmente statt. Als bevorzugte Fluchtwegmarkierung werden Pigmente auf Basis von Strontiumaluminat (SrAl₂O₄) eingesetzt. Auch ist es üblich, Pigmente auf der Basis von ZnS einzusetzen. In der Regel strahlen die für die Fluchtwegmarkierung eingesetzten Pigmente in einem Wellenbereich oberhalb von 500 nm ab, beispielsweise 510 nm bis 540 nm. Die Anregung der photolumineszenten Pigmente erfolgt jedoch in einem niedrigeren Wellenlängenbereich, beispielsweise von 200 nm bis 450 nm.

Fig. 2 zeigt das Emissionsspektrum des LED-Beleuchtungssystems. Um weißes Licht zu erzeugen, werden grüne, blaue und rote Leuchtdioden miteinander gemischt. Jede der Leuchtdioden besitzt ein Emissionsspektrum 10, 12 und 14. In Fig. 2 sind die Emissionsspektren der Leuchtdioden zur besseren Übersicht ebenfalls auf den Wert 100 % normiert. Dies ist jedoch keineswegs notwendig, es ist durchaus möglich, dass die Leuchtdioden unterschiedliche Beleuchtungsstärken relativ zueinander besitzen.

Aus der Darstellung in Fig. 2 wird deutlich, dass für die Anregung der Pigmente mit der Anregungskurve A lediglich die blauen Leuchtdioden mit ihrem Emissionsspektrum 10 beitragen. Das von der grünen und der roten Leuchtdiode emittierte Licht trägt nicht zur Aufladung der Fluchtwegmarkierung bei. Hieraus wird auch deutlich, warum eine Gesamtmessung der Bestrahlungsstärke mit einem Spektrometer vorgenommen wird und ein Luxmeter alleine nicht ausreicht, um eine zuverlässige Prüfung der Fluchtwegmarkierung vorzunehmen. Bei einer Messung mit einem Luxmeter wird ebenfalls der Beitrag der grünen und der roten Leuchtdiode mitgemessen, obwohl dieser keinen Beitrag zur Anregung der Fluchtwegmarkierung liefert. Zur besseren begrifflichen Unterscheidung wird bei der Erfindung auf die Bestrahlungsstärke abgestellt, die in der Radiometrie dem Begriff der Beleuchtungsstärke aus der Photometrie entspricht.

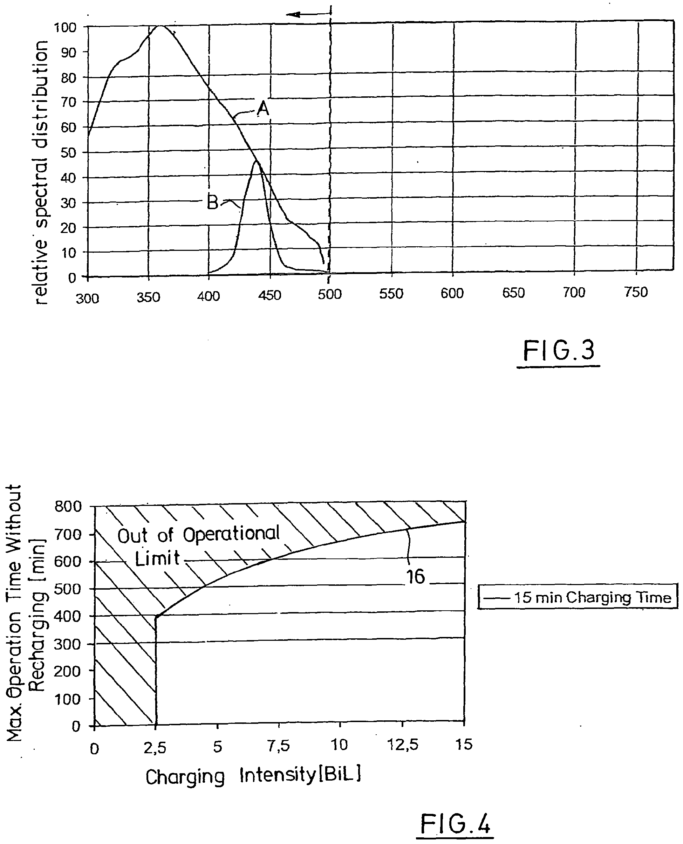

Fig. 3 zeigt eine gewichtete Beleuchtungsstärke B, die sich aus der Gewichtung des Emissionsspektrums 10 mit der Kurve A in Fig. 2 ergibt. Das gewichtete Emissionsspektrum B ist wiederum eine Funktion der Wellenlänge. Deutlich ist in Fig. 3 zu erkennen, dass das Maximum des Emissionsspektrums 10 sich in seinem nicht gewichteten Zustand oberhalb von 450 nm befindet, während das gewichtete Emissionsspektrum sein Maximum bei einem Wert von unter 450 nm besitzt. Aufgrund der zwischen 360 nm und 500 nm stark fallenden Flanke der Anregungskurve A verschiebt sich das Maximum des gewichteten Emissionsspektrums.

In den Fign. 2 und 3 gezeigten Emissionsspektren und das gewichtete Emissionsspektrum B' besitzen für eine einfachere Darstellung in den Figuren noch beliebige Einheiten.

Bei dem erfindungsgemäßen Prüfverfahren wird nicht auf das Emissionsspektrum der Leuchtdioden abgestellt, sondern auf eine erfasste Bestrahlungsstärke E(*λ*).Die Abhängigkeit der Bestrahlungsstärke von den Positionen der Fluchtwegmarkierung relativ zu der Lichtquelle ergibt sich daraus, dass die Bestrahlungsstärke mit der Entfernung abnimmt, so dass ein und dieselbe Lichtquelle mit größerer Entfernung eine geringere Bestrahlungsstärke besitzt. Bei dem erfindungsgemäßen Verfahren wird dann nicht das spektrale Emissionsspektrum, wie in den Figuren darstellt, sondern die gewichtete Bestrahlungsstärke ermittelt. Qualitativ zeigen aber sowohl die Bestrahlungsstärke abhängig von der Wellenlänge als auch die gewichtete Bestrahlungsstärke abhängig von der Wellenlänge denselben spektralen Verlauf wie die Emissionsspektren, lediglich mit dem Unterschied, dass die gewichtete Bestrahlungsstärke die Bestrahlungsstärke in W/m² für eine Wellenlänge angibt.

Bei dem erfindungsgemäßen Verfahren wird über die gewichtete Bestrahlungsstärke B(*λ*) summiert oder integriert, um die Aufladebestrahlungsstärke (BiL) zu ermitteln. Bezogen auf Fig. 3 bedeutet dies, dass die Fläche unterhalb der Kurve B' ermittelt wird. Die Fläche ist ein Maß dafür, wie stark insgesamt die Fluchtwegmarkierung durch das Beleuchtungssystem angeregt wird.

Fig. 4 zeigt eine Kennlinie 16, die für eine Ladedauer von 15 Minuten angibt, bei welcher Aufladebestrahlungsstärke (BiL) sich welche maximale Nachleuchtdauer für die Fluchtwegmarkierung ergibt. An der Kurve ist zu erkennen, dass für eine maximale Nachleuchtdauer von 400 Minuten auf eine Aufladebestrahlungsstärke von mindestens 2,5 erforderlich ist. Bei einer Aufladebestrahlungsstärke von 7,5 ergibt sich eine Nachleuchtdauer von 600 Minuten.

Das erfindungsgemäße Verfahren erlaubt es, für ein konkret vorgegebenes Lichtsystem und konkret vorgegebene Einbaupositionen der Fluchtwegmarkierung relativ zu dem Lichtsystem die Aufladebeleuchtungsstärke zu ermitteln. Anhand der Kennlinie kann dann ermittelt werden, ob für diese Aufladebeleuchtungsstärke eine ausreichende Nachleuchtdauer erzielt wird. Soll das Prüfverfahren für mehrere verschiedene Aufladezeiten ermittelt werden, so ist für jede Aufladezeit eine eigene Kennlinie 16 zu ermitteln. Messungen haben gezeigt, dass die so entstehende Schar von Kennlinien im Wesentlichen parallel verläuft.

## Patentansprüche

1. Prüfverfahren für eine photolumineszente Fluchtwegmarkierung, die eine Einbauposition besitzt und von einer Lichtquelle in definierter Position relativ zu der Einbauposition beleuchtet wird, um die Fluchtwegmarkierung für ein Nachleuchten aufzuladen, **gekennzeichnet durch** folgende Verfahrensschritte:
- eine Anregungskurve A(*λ*) abhängig von der Wellenlänge wird für die Fluchtwegmarkierung bereitgestellt,
- Erfassen der Bestrahlungsstärke E(*λ*) der Lichtquelle für die Einbauposition der Fluchtwegmarkierung abhängig von der Wellenlänge,
- Ermittlung einer gewichteten Bestrahlungsstärke B(*λ*) als Produkt der Bestrahlungsstärke und der Anregungskurve abhängig von der Wellenlänge,
- Ermittlung einer Aufladebestrahlungsstärke (BiL) als Integral über der gewichteten Bestrahlungsstärke über die Wellenlänge,
- eine von der Aufladedauer tₗ abhängige Kennlinie Kₜₗ (BiL) für die Fluchtwegmarkierung, welche die Nachleuchtdauer für die Fluchtwegmarkierung bei der Aufladedauer tₗ für die Aufladebestrahlungsstärke (BiL) angibt, wird bereitgestellt,
- Überprüfung anhand der Kennlinie Kₜₗ (BiL) für die Aufladedauer tₗ, ob für die Aufladebestrahlungsstärke (BiL) eine ausreichende Nachleuchtdauer erzielt wird.

2. Prüfverfahren nach Anspruch 1, **dadurch gekennzeichnet, dass** die Bestrahlungsstärke E(λ) der Lichtquelle mit einem Transmissionsspektrum T(λ) eines Farbfilters der Fluchtwegmarkierung multipliziert wird.

3. Prüfverfahren nach Anspruch 1 oder 2, **dadurch gekennzeichnet, dass** die Kennlinie Kₜₗ (BiL) ermittelt wird, indem für mehrere Aufladebestrahlungsstärken (BiL) die zugehörigen Nachleuchtdauer gemessen und jeweils als ein Stützpunkt der Kennlinie verwendet wird.

4. Prüfverfahren nach Anspruch 3, **dadurch gekennzeichnet, dass** eine Schar von Kennlinien Kₜₗ (BiL) für mehrere Aufladedauern ermittelt wird.

5. Prüfverfahren nach Anspruch 3 oder 4, **dadurch gekennzeichnet, dass** als Lichtquellen Leuchtdioden vorgesehen sind, deren Bestrahlungsstärke zur Ermittlung der Kennlinie eingestellt werden kann, um unterschiedliche Aufladebestrahlungsstärken zu erzielen.

6. Prüfverfahren nach einem der Ansprüche 1 bis 5, **dadurch gekennzeichnet, dass** als die Anregungskurve A(*λ*) die Fluchtwegmarkierung eine Anregungskurve A_{pig}(*λ*) der nachleuchtenden Pigmente in der Fluchtwegmarkierung verwendet wird.

7. Prüfverfahren nach einem der Ansprüche 1 bis 6, **dadurch gekennzeichnet, dass** die Bestrahlungsstärke E(*λ*) mit einem Spektrometer gemessen wird.

8. Prüfverfahren nach Anspruch 7, **dadurch gekennzeichnet, dass** die Bestrahlungsstärke E(*λ*) für einen mittleren Abstand zwischen Lichtquelle und Fluchtwegmarkierung ermittelt wird.

9. Spektrometer zur Prüfung einer photolumineszenten Fluchtwegmarkierung, die eine Einbauposition besitzt und von einer Lichtquelle in definierter Position relativ von der Einbauposition beleuchtet wird, um die Fluchtwegmarkierung für ein Nachleuchten aufzuladen, wobei das Spektrometer Folgendes aufweist:
- einen Speicher zum Speichern einer von der Wellenlänge abhängigen Anregungskurve A(λ) für die Fluchtwegmarkierung,
- eine spektrale Messeinrichtung, die die Bestrahlungsstärke der Lichtquelle für die Einbauposition der Fluchtwegmarkierung abhängig von der Wellenlänge erfasst,
- Mittel zur Multiplikation der Bestrahlungsstärke und der Anregungskurve, sowie einen weiteren Speicher zum Speichern einer resultierenden gewichteten Bestrahlungsstärke B(λ),
- Integrationsmittel, die auf den weiteren Speicher zugreifen, um die gespeicherte Bestrahlungsstärke über die Wellenlänge zu integrieren und so eine Aufladebestrahlungsstärke (BiL) zu bestimmen, und
- Auswertemittel, die eine von der Aufladedauer tₗ abhängige Schar von Kennlinien Kₜₗ (BiL) aufweisen, wobei eine der Kennlinien Kₜₗ (BiL) eine Nachleuchtdauer für die Fluchtwegmarkierung bei der Aufladedauer tₗ für die von dem Integrationsmittel ermittelte Aufladebestrahlungsstärke (BiL) angibt.

10. Spektrometer nach Anspruch 9, **dadurch gekennzeichnet, dass** weitere Mittel zur Multiplikation der Bestrahlungsstärke der Lichtquelle E(λ) mit einem Transmissionsspektrum T(λ) eines Farbfilters der Fluchtwegmarkierung vorgesehen sind.

11. Computer, angepasst, das Verfahren nach einem der Ansprüche 1 bis 8 durchzuführen, wobei der Computer einen Dateneingang, um die Anregungskurve A(λ), die Beleuchtungsstärke B(λ), die Aufladedauer tₗ und eine Schar von Kennlinien Kₜₗ (BiL) einzulesen, und einen Datenausgang für die sich ergebende Nachleuchtdauer aufweist.

12. Computer nach Anspruch 11, **dadurch gekennzeichnet, dass** der Dateneingang ausgebildet ist, um ein Transmissionsspektrum T(λ) eines Farbfilters der Fluchtwegmarkierung einzulesen.

## Claims

1. A testing method for a photoluminescent escape path marking which has an installation position and is illuminated by a light source in a defined position relative to the installation position, in order to charge the escape path marking for achieving afterglow,
**characterised by** the following method steps:
- an excitation curve A(λ) depending upon the wavelength is provided for the escape path marking,
- recording of the irradiance E(λ) of the light source for the installation position of the escape path marking, depending upon the wavelength;
- determination of a weighted irradiance B(λ) as a product of the irradiance and the excitation curve, depending upon the wavelength,
- determination of a charging irradiance (BiL) as an integral over the weighted irradiance across the wavelength,
- a characteristic curve Kₜₗ (BiL) for escape path marking depending upon the charging time tₗ is provided which indicates the afterglow time for escape path marking at the charging time tₗ for the charging irradiance (BiL),
- ascertaining via the characteristic curve Kₜₗ (BiL) for the charging time tₗ whether a sufficient afterglow time is achieved for the charging irradiance (BiL).

2. The testing method according to claim 1, **characterised in that** the irradiance E(λ) of the light source is multiplied by a transmission spectrum T(λ) of a colour filter of the escape path marking.

3. The testing method according to claim 1 or 2, **characterised in that** the characteristic curve Kₜₗ (BiL) is ascertained by measuring the associated afterglow time for multiple charging irradiances (BiL) and respectively using it as a support point of the characteristic curve.

4. The testing method according to claim 3, **characterised in that** a set of characteristic curves Kₜₗ (BiL) is ascertained for multiple charging times.

5. The testing method in accordance with claim 3 or 4, **characterised in that** light-emitting diodes are provided as light sources, the irradiance of which can be set to determine the characteristic curve in order to achieve different charging irradiances.

6. The testing method according to one of claims 1 to 5, **characterised in that** an excitation curve A_{pig}(λ) of the luminescent pigments in the escape path marking is used as the excitation curve A(λ) for the escape path marking.

7. The testing method according to one of claims 1 to 6, **characterised in that** the irradiance E(λ) is measured with a spectrometer.

8. The testing method according to claim 7, **characterised in that** the irradiance E(λ) is determined for a mean distance between the light source and the escape path marking.

9. A spectrometer for testing a photoluminescent escape path marking which has an installation position and is illuminated by a light source located in a defined position relative to the installation position, in order to charge the escape path marking for achieving afterglow, wherein the spectrometer has:
- a memory for accumulating an excitation curve A(λ) depending upon the wavelength for the escape path marking,
- a spectral measuring device, which records the irradiance of the light source for the installation position of the escape path marking, depending upon the wavelength,
- a means of multiplying the irradiance and the excitation curve as well as a further memory for accumulating a weighted irradiance B(λ),
- integration means, which access the further memory to integrate the accumulated irradiance over the wavelength and thus determine a charging irradiance (BiL), and
- evaluation means having a set of characteristic curves Kₜₗ (BiL) depending upon the charging time tₗ, wherein one of the characteristic curves Kₜₗ (BiL) specifies an afterglow time for the escape path marking at the charging time tₗ for the charging irradiance (BiL) ascertained by the integration means.

10. The spectrometer according to claim 9, **characterised in that** further means of multiplying the irradiance of the light source E(λ) by a transmission spectrum T(λ) of a colour filter of the escape path marking are provided.

11. A computer configured for executing the method according to one of claims 1 to 8, wherein the computer has a data input, in order to read the excitation curve A(λ), the illumination level B(λ), the charging time tₗ and a set of characteristic curves Kₜₗ (BiL), and a data output for the resulting afterglow time.

12. The computer according to claim 11, **characterised in that** the data input is configured to read a transmission spectrum T(λ) of a colour filter of the escape path marking.

## Revendications

1. Procédé de contrôle pour un marquage photoluminescent des issues de secours qui possède une position de montage et est éclairé par une source lumineuse dans une position définie par rapport à la position de montage pour charger le marquage des issues de secours afin d'obtenir une luminescence,
**caractérisé par** les étapes de procédé suivantes :
- fourniture d'une courbe d'excitation A(λ) en fonction de la longueur d'onde pour le marquage des issues de secours,
- mesure de l'irradiance E(*λ*) de la source lumineuse pour la position de montage du marquage des issues de secours en fonction de la longueur d'onde,
- détermination d'une irradiance pondérée B(*λ*) comme étant le produit de l'irradiance par la courbe d'excitation en fonction de la longueur d'onde,
- détermination d'une irradiance de charge (BiL) comme étant l'intégrale de l'irradiance pondérée en fonction de la longueur d'onde,
- fourniture d'une courbe caractéristique Kₜₗ (BiL) en fonction de la durée de chargement tₗ pour le marquage des issues de secours, qui indique la durée de luminescence du marquage des issues de secours pour la durée de chargement tₗ avec l'irradiance de charge (BiL),
- vérification, sur base de la courbe caractéristique Kₜₗ (BiL) pour la durée de chargement tₗ, du fait qu'une durée de luminescence suffisante est obtenue pour l'irradiance de charge (BiL).

2. Procédé de contrôle selon la revendication 1, **caractérisé en ce que** l'irradiance E(*λ*) de la source lumineuse est multipliée par un spectre de transmission T(*λ*) d'un filtre de couleur du marquage des issues de secours.

3. Procédé de contrôle selon la revendication 1 ou 2, **caractérisé en ce que** la courbe caractéristique Kₜₗ (BiL) est déterminée en mesurant pour plusieurs irradiances de charge (BiL) la durée de luminescence correspondante et en utilisant chaque fois celle-ci comme point de référence de la courbe caractéristique.

4. Procédé de contrôle selon la revendication 3, **caractérisé en ce qu'**un groupe de courbes caractéristiques Kₜₗ (BiL) est déterminé pour plusieurs durées de chargement.

5. Procédé de contrôle selon la revendication 3 ou 4, **caractérisé en ce que** les sources lumineuses sont des diodes électroluminescentes dont l'irradiance peut être réglée pour la détermination de la courbe caractéristique afin d'obtenir différentes irradiances de charge.

6. Procédé de contrôle selon l'une des revendications 1 à 5, **caractérisé en ce qu'**une courbe d'excitation A_{pig}(*λ*) des pigments luminescents du marquage des issues de secours est utilisée comme courbe d'excitation A(*λ*) du marquage des issues de secours.

7. Procédé de contrôle selon l'une des revendications 1 à 6, **caractérisé en ce que** l'irradiance E(*λ*) est mesurée à l'aide d'un spectromètre.

8. Procédé de contrôle selon la revendication 7, **caractérisé en ce que** l'irradiance E(*λ*) est déterminée pour une distance intermédiaire entre la source lumineuse et le marquage des issues de secours.

9. Spectromètre de contrôle d'un marquage des issues de secours photoluminescent qui possède une position de montage et est éclairé par une source lumineuse dans une position définie par rapport à la position de montage pour charger le marquage des issues de secours afin d'obtenir une luminescence, dans lequel le spectromètre comporte les éléments suivants :
- une mémoire pour le stockage d'une courbe d'excitation A(*λ*) en fonction de la longueur d'onde pour le marquage des issues de secours,
- un dispositif de mesure spectrale qui enregistre l'irradiance de la source lumineuse pour la position de montage du marquage des issues de secours en fonction de la longueur d'onde,
- des moyens de multiplication de l'irradiance par la courbe d'excitation, ainsi qu'une autre mémoire pour le stockage d'une irradiance pondérée résultante B(*λ*),
- des moyens d'intégration qui accèdent à ladite autre mémoire pour calculer l'intégrale de l'irradiance enregistrée en fonction de la longueur d'onde et pour déterminer ainsi une irradiance de charge (BiL), et
- des moyens d'évaluation qui comportent un groupe de courbes caractéristiques Kₜₗ (BiL) en fonction de la durée de chargement tₗ,
dans lequel l'une des courbes caractéristiques Kₜₗ (BiL) indique une durée de luminescence pour le marquage des issues de secours pour la durée de chargement tₗ indiquée pour l'irradiance de charge (BiL) déterminée par le moyen d'intégration.

10. Spectromètre selon la revendication 9, **caractérisé en ce que** d'autres moyens de multiplication de l'irradiance E(λ) de la source lumineuse sont pourvus d'un spectre de transmission T(λ) d'un filtre de couleur du marquage des issues de secours.

11. Ordinateur adapté pour mettre en oeuvre le procédé selon l'une des revendications 1 à 8, dans lequel l'ordinateur comporte une entrée de données pour lire la courbe d'excitation A(*λ*), l'irradiance B(*λ*), la durée de chargement tₗ et un groupe de courbes caractéristiques Kₜₗ (BiL), ainsi qu'une sortie de données pour la durée de luminescence résultante.

12. Ordinateur selon la revendication 11, **caractérisé en ce que** l'entrée de données est constituée pour lire un spectre de transmission T(*λ*) d'un filtre de couleur du marquage des issues de secours.
